# EUROPEAN PATENT APPLICATION

(11) **EP 1 826 949 A1**
(43) Date of publication of application: **29.08.2007**
(21) Application number: 06300167.1
(22) Date of filing: 28.02.2006
(51) Int. Cl.: H04L 12/28, H04Q 7/38

(54) **Seamless handover method and system**

(71) Applicant: Thomson Licensing, 92100 Boulogne-Billancourt (FR)
(72) Inventor: Zhang, Huan Qiang Rm 03-09,8F, Bldg.A, 100085, Beijing (CN); Ma, Xiao Jun Rm 03-09,8F, Bldg. A, 100085, Beijing (CN); Li, Jun, Plainsboro, NJ 08536 (US); Wang, Charles Rm 03-09, 8F, Bldg. A, 100085, Beijing (CN)
(74) Representative: Rossmanith, Manfred

(57) **Abstract**

The present invention provides a communication system for performing the seamless handover of a mobile station between at least a first wireless access point and a second wireless access point within wireless LAN. The mobile station is coupled with at least the first wireless access point for receiving and/or sending the data from and/or to the first wireless access point. The system comprises a first server for storing data; a switch for exchanging the data with the first server and the first and second wireless access points; and a second server coupled to the switch, for storing the data from the first server when the mobile station roams from one access point to another one, and transferring the stored data to the mobile station through the switch, so as to avoid the packet loss of the mobile station during the handover.

## Description

### FIELD OF THE INVENTION

The present invention relates generally to communication technologies, and particularly to a seamless handover method, a communication system and method for performing the seamless handover of a mobile station between at least a first wireless access point and a second wireless access point within wireless LAN.

### BACKGROUND OF THE INVENTION

Over the last few years, there has been a steadily increasing amount of video content distributed via the internet; something that has been, to some extent, stimulated by the increase in penetration of broadband internet connectivity. While internet usage patterns have been changing, access technologies have also been evolving. Key wireless technologies, e.g. Wireless LAN (WLAN) and 3G, are reaching a level of maturity such that it is now possible to credibly state that substantial numbers of users will use wireless technologies for internet access in the near future. These users will desire similar behaviours from their wireless internet access to that which is delivered via a wired medium.

It is interesting to consider how well wireless access technologies are suitable to streaming video content, as it is quite conceivable that significant numbers of users may desire to stream video content to their devices via such technologies. Clearly, it is undesirable for technical considerations such as signal strength or congestion in the access network to impact the quality of the video being viewed by the user.

Seamless network connectivity can limit the effect of network issues on user perceived quality, to some extent, but, of itself, does not necessarily ensure that the quality of experience of the end user is optimal. In the case in which a number of wireless access networks are available to the user, it is interesting to consider which wireless access network should be used at any point in time to deliver the best quality to the user.

In Wireless LAN (WLAN), a single WLAN Access Point (AP) can only provide a very limited coverage for a mobile station. In order to offer full coverage of company working area or a hotspot, generally multiple APs are applied. In such a situation, when streaming live video in a WLAN network, no matter how we reduce the channel scan time and handover interval, the handover of mobile station from one AP to another one might cause packet loss, and thereby decrease the video quality. Therefore, in order to maintain the communication for those moving mobile stations, the system must support seamless handover, i.e. the handover must be imperceptible to the user when a mobile station moves from the coverage of one AP to another one. This is extremely important for those real-time applications like VoIP, video streaming etc. In these cases, the packet loss problem occurred during handover process must be solved.

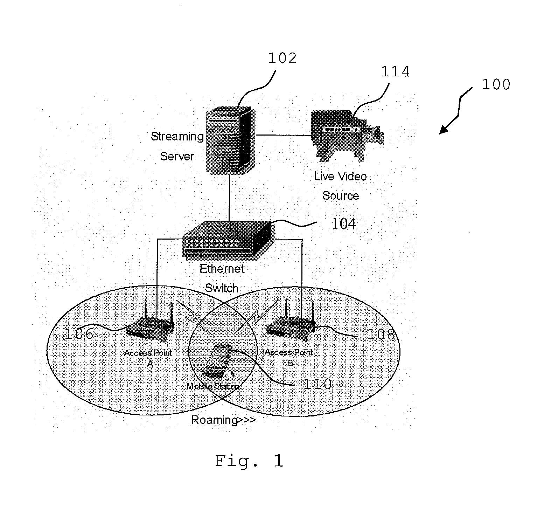

Fig. 1 shows a conventional WLAN video stream broadcasting system **100**.

As shown in Fig. 1, the broadcasting system **100** includes a steaming server **102**, coupled with a live video source **114**, for receiving and storing the video stream from the live video source **114**; an Ethernet switch **104**, for exchanging the data with the steaming server **102** and at least two wireless access points (**106**, **108**); the wireless access points (**106, 108**), coupled to the switch **104**, for receiving and/or sending the data from and/or to the switch **104**; and a mobile station **110**, coupled with at least one of wireless access points (**106, 108**), for receiving and/or sending the data from and/or to wireless access points (**106, 108**). During the roaming of the mobile station **110** from one wireless access point **106** to another **108**, the packet loss might occur.

Though some intelligent handover algorithms may adopt some methods to reduce the time spent in channel scanning, all handover algorithms have the following procedure: make channel scan to find candidate APs; make authentication or pre-authentication (If pre-authentication is used to accelerate handover); de-associate with old AP; and re-associate with new AP.

During the above handover process, no matter how to minimize the time interval spent in scan and handover process, packet loss occurs in two situations:

### 1. Channel scanning:

Because WLAN card only has one radio module tuned to one channel to transmit and receive data, when the radio switches from one frequency to another to perform channel scanning, it cannot receive any data from its associated AP. This makes situation even worse for broadcast or multicast data, because in IEEE802.11 WLAN, there's no data re-transmission for these packets. Though some algorithms adopt selective channel scan or other tricky methods to reduce the time spent in channel scan, this process itself is still unavoidable.

### 2. Re-associate interval:

A re-associate interval is defined as such one that the mobile station has de-associated with a previous AP, but still has not associated with a new AP. During this interval, all the packets in frame buffers of Ethernet switch and AP are lost.

Packet loss during handover process decreases video quality, especially when the lost packets are critical data of a video stream (e.g. data of I-frames), the whole GOP (Group of Picture) will get infected.

Data caching technology has been widely used to extend the scalability of video delivery systems, while up to today, it has seldom been used to assist wireless network handover.

After paper/patent investigation, it is found quite number of prior art documents have disclosed how to solve handover problems for video caching system (referring to Patent EP1331791A2, JP2003289327A, US6907501B2, US20030145038A1 from DoCoMo Communication Laboratory), but only one prior art taught the use of caching to assist wireless network handover (and it's for 3G network, not for WLAN network handover), which is a paper from IEEE Transactions on Wireless Communications, Vol. 2, No. 2, March 2003, entitled "Hierarchical Cache Design for Enhancing TCP Over Heterogeneous Networks With Wired and Wireless Links". This paper proposed a method of using caching service at MSC (Mobile Switch Center) to minimize the TCP retransmission latency during handover interval, while this method is only applicable to TCP-based applications.

In addition, US Patent Application No. 20050141455 disclosed a method and system for setting TCP proxy to reduce packet loss and transmission delay in wire/wireless integrated IP network. But it caches TCP stream to reduce packet loss and transmission delay by using a wireless network controller to store the packets between server and mobile station, which fails to cache UDP packet and causes the date transmission delay.

To solve any one of the above problems, the present invention proposes a cache-based seamless handover scheme for WLAN video streaming applications.

### SUMMARY OF THE INVENTION

In accordance with the present invention, a communication system for performing the seamless handover of a mobile station between at least a first wireless access point and a second wireless access point within wireless LAN is provided.

The communication system in accordance with the present invention can perform the seamless handover of a mobile station between a first wireless access point and a second wireless access point within wireless LAN, wherein, the mobile station is coupled with at least the first wireless access point for receiving and/or sending the data from and/or to the first wireless access point. The communication system comprises a first server for storing data; a switch, coupled with the first and second wireless access points, for exchanging the data with the first server and the first and second wireless access points; and a second server coupled with the switch, for storing the data from the first server when the mobile station roams from the first access point to the second access point, and transferring the stored data to the mobile station through the switch, so as to avoid the packet loss of the mobile station during the handover.

In accordance with the present invention, the first server is a streaming server for storing streaming media data for the mobile station. The second server is a cache server for caching the data from the first server when the mobile station roams from the first access point to the second access point, and transferring the cached data to the mobile station through the switch. The communication system is a WLAN video stream broadcasting system. The switch is an Ethernet switch.

In accordance with the present invention, during roaming from the first access point to the second access point, and performing channel scanning to find available wireless access points: the mobile station sends a data caching start request to the second server; the second server sends an acknowledgement message back to the mobile station in response to the data cache start request, and starts to receive and cache the data for the mobile station from the first server; after the handover or scan process is over, the mobile station sends data cache stop request to the second server; and the second server stops caching the data for the mobile station in response to the data cache stop request, and transfers the data to the mobile station.

In accordance with the present invention, upon receipt of a multicast data, the second server joins this multicast group to get the multicast data from the first server, and upon receipt of an unicast data, the second server produces a fake Ethernet frame and assembles the fake Ethernet frame with the MAC address of the mobile station to send the assembled frame to the switch once or several times, so as to deceive the switch, make the switch change the MAC-port map entry of the mobile station, and then receive the data that otherwise be directed to the mobile station from the first server.

In accordance with the present invention, the communication system further comprises a live video source coupled to the first server to send stream video data to the first server.

In addition, the present invention also provides a communication method for performing the seamless handover of a mobile station between at least a first wireless access point and a second wireless point within wireless LAN, which comprises following steps:
S302, providing a first server to store data;
S304, providing a switch to exchange the data with the first server and the first and second wireless access points;
S306, providing the first and second wireless access points coupled to the switch to receive and/or send the data from and/or to the switch;
S308, coupling the mobile station with at least the first wireless access point to receive and/or send the data from and/or to the first wireless access point; and
S310, providing a second server coupled to the switch to store the data from the first server when the mobile station roams from the first access point to the second access point, and to transfer the stored data to the mobile station through the switch, so as to avoid the packet loss of the mobile station during the handover.

In accordance with the present invention, the first server is a streaming server for storing streaming media data for the mobile station. The second server is a cache server for caching the data from the first server when the mobile station roams from the first access point to the second access point, and transferring the cached data to the mobile station through the switch. The communication system is a WLAN video stream broadcasting system. The switch is an Ethernet switch.

In accordance with the present invention, during roaming from the first access point to the second access point and performing channel scanning to find available wireless access points: the mobile station sends a data caching start request to the second server; the second server sends an acknowledgement message to the mobile station in response to the data cache start request, and starts to receive and cache the data for the mobile station from the first server; after the handover or scan process is over, the mobile station sends data cache stop request to the second server; and the second server stops caching the data for the mobile station in response to the data cache stop request, and transfers the data to the mobile station.

In accordance with the present invention, upon receipt is a multicast data, the second server joins this multicast group to get the multicast data from the first server, and upon receipt is an unicast data, the second server produces a fake Ethernet frame and assembles the fake Ethernet frame with the MAC address of the mobile station to send the assembled frame to the switch once or several times, so as to deceive the switch, make the switch change the MAC-port map entry of the mobile station, and then receive the data that otherwise be directed to the mobile station from the first server.

In accordance with the present invention, the communication method further providing a live video source coupled to the first server to send stream video data to the first server.

Furthermore, the present invention also provides a seamless handover method for a mobile station between at least a first wireless access point and a second wireless access point within wireless LAN, which comprises following steps: sending a data caching start request to the second server by a mobile station; sending an acknowledgement message to the mobile station in response to the data cache start request and starting to receive and cache the data for the mobile station from the first server by a second server; sending a data cache stop request to the second server by the mobile station after the handover or scan process is over; and stopping caching the data for the mobile station in response to the data cache stop request and transferring the data to the mobile station by the second server.

According to the present invention, the data cache start request message comprises: a control message flag field indicating to the second server and the mobile station whether the received UDP packet is a caching control message; a message type field having a first value, indicating the message is a data cache start request; a sequence number of request, which is a unique sequence number which in the mobile station for the message; a stream destination address, which is the IP address of the stream to be cached; a stream destination port, which is the UDP port of the stream to be cached; and a padding field, which is used to make the message word-aligned.

The data cache stop request message comprises: a control message flag field indicating to the second server and the mobile station whether the received UDP packet is a caching control message; a message type filed having a second value other than the first value, indicating the message is a data cache stop request; a sequence number of request, which is a unique sequence number in the mobile station for the message; a stream destination address, which is the IP address of the stream to be cached; a stream destination port, which is the UDP port of the stream to be cached; and a padding field, which is used to make the message word-aligned.

The acknowledgement message comprises: a control message flag field indicating to the second server and the mobile station whether the received UDP packet is a caching control message; a message type field having a third value other than the first value and the second value, indicating the message is a data cache start request; a sequence number of request, which is a unique sequence number in the mobile station for the message; a requester's address, which is the IP address of the mobile station which startups caching request; a requester's port, which is the UDP port of the mobile station which startups caching request; and a padding field, which is used to make the message word-aligned.

Other objects, advantages and novel features of the present invention will become more apparent from the following detailed description when taken in conjunction with the accompanying drawings.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
Fig. 1 shows a conventional WLAN video stream broadcasting system 100;
Fig. 2 shows a communication system 200 according to the present invention;
Fig. 3 shows the flow chart of a communication method according to the present invention;
Fig. 4 shows the flow chart of a seamless handover method according to the present invention;
Fig. 5 shows the work flow of the seamless handover method as shown in Fig. 4;
Fig. 6 shows a message format of a data cache start request message;
Fig. 7 shows a message format of a data cache stop request message; and
Fig. 8 shows a message format of an acknowledgement message.

### DETAILED DESCRIPTION OF THE PREFERRED EMBODIMENT

The technical features of the present invention will be described further with reference to the embodiments. The embodiments are only preferable examples without limiting to the present invention. It will be well understood by the skilled person in the art upon reading the following detail description in conjunction with the accompanying drawings.

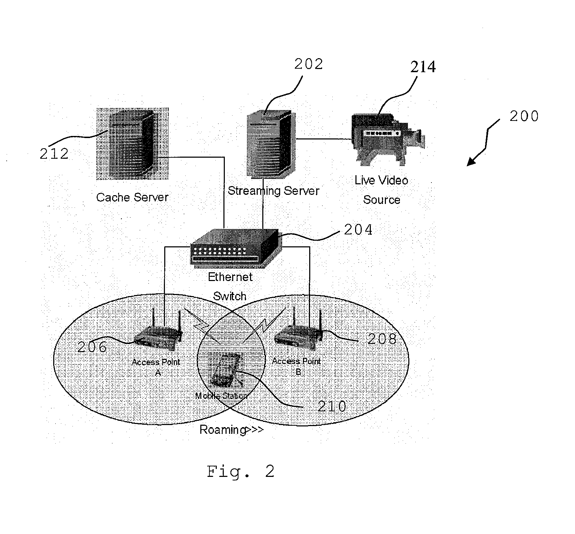

As shown in Fig. 2, a communication system **200** is provided, which differs from the conventional WLAN video stream broadcasting system **100** shown in Fig. 1. by adding a second server **212**. The second server **212** is coupled to the switch **204** for storing the data from the streaming server **202** when the mobile station **210** roams from access point **206** to access point **208**, and transferring the stored data to the mobile station **210** through the switch **204**, so as to avoid the packet loss of the mobile station **210** during the handover.

Preferably, the first server **202** is a streaming server for storing streaming media data for the mobile station **210**, while the second server is a cache server for caching the data from the first server **202** when the mobile station **210** roams from access point **206** to access point **208**, and transferring the cached data to the mobile station **210** through the switch **204**. Those skilled in the art can understand that any kinds of server having a cache module can be used as the second server **212**. The cache module can even be integrated with another mobile station, so another mobile station can functions as a cache sever.

In this embodiment, the communication system **200** is a WLAN video stream broadcasting system and the switch **204** is an Ethernet switch.

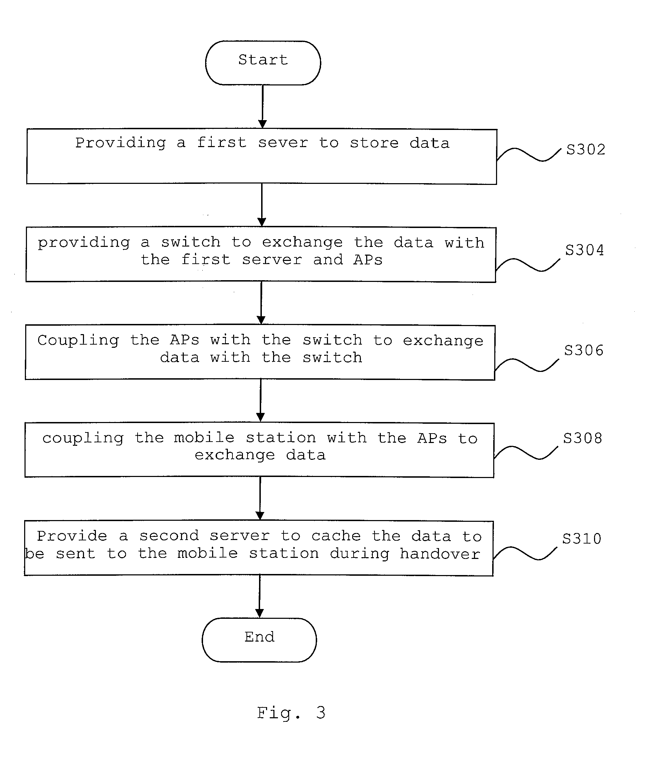

Fig. 3 shows the flow chart of a communication method according to the present invention.

With reference to Fig. 2, at step S302 of the method, the first server **202** is provided to store data. At step S304, the switch **204** is provided to exchange the data with the first server **202** and first and second wireless access points **206** and **208**. At step S306, wireless access points **206** and **208** are coupled with the switch **204** to receive and/or send the data from and/or to it. At step S308, the mobile station **210** is coupled with at least one of two wireless access points **206** and **208** to receive and/or send the data from and/or to them. At step S310, the second server **212** is coupled to the switch **204** to store the data from the first server **202** when the mobile station **210** roams from one access point to the another, and to transfer the stored data to the mobile station **210** through the switch **204**, so as to avoid the packet loss of the mobile station during the handover.

During roaming from one access point to the another and performing channel scanning to find available wireless access points, the mobile station **210** sends a data caching start request to the second server **212**, which in turn, sends an acknowledgement message back to the mobile station **210** in response to the data cache start request, and starts to receive and cache the data for the mobile station **210** from the first server **202**; after the handover or scan process is over, the mobile station **210** sends data cache stop request to the second server **212**, which stops caching the data for the mobile station **210** in response to the data cache stop request, and transfers the data to the mobile station **210**.

In this method, upon receipt of a multicast data, the second server **212** joins this multicast group to get the multicast data from the first server **202**, but upon receipt of an unicast data, the second server **212** produces a fake Ethernet frame and assembles the fake Ethernet frame with the MAC address of the mobile station **210** to send the assembled frame to the switch **204** once or several times, so as to deceive the switch **204**, make the switch **204** change the MAC-port map entry of the mobile station **210**, and then receive the data that otherwise be directed to the mobile station **210** from the first server **202**.

The present invention provides a caching mechanism to preserve the data sent to the mobile station when it is performing scanning or handover. The great benefit of the present invention is that it is independent from streaming server, AP and players, and the deployment of this method only need adding a cache server into LAN, and making minor changes in handover algorithm of mobile station.

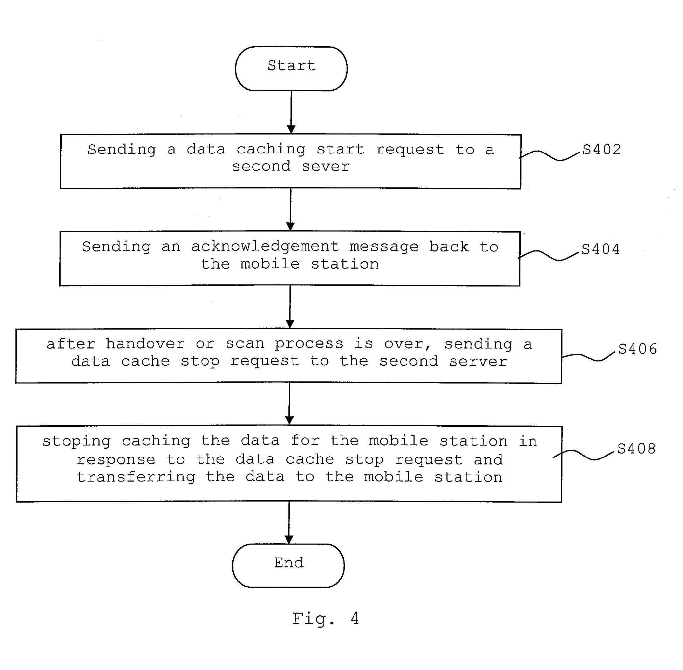

Fig. 4 shows the flow chart of a seamless handover method according to the present invention.

The seamless handover method according to the present invention is described with reference of Fig. 2. From step S402, the mobile station **210** sends a data caching start request to the second server **212**; at step S404, a second server **212** sends an acknowledgement message back to the mobile station **210** in response to the data cache start request, and starts to receive and cache the data for the mobile station **210** from the first server **202**; at step S406, after the handover or scan process is over, the mobile station **210** sends data cache stop request to the second server **212**; and at step S406 the second server **212** stops caching the data for the mobile station 210 in response to the data cache stop request, and transfers the data to the mobile station **210**.

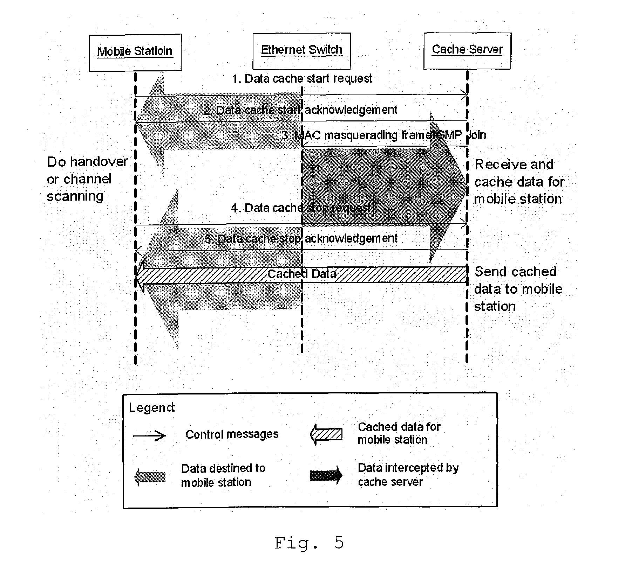

Fig. 5 shows the work flow of the seamless handover method as shown in Fig. 4.

As shown in Fig. 5, the cache server communicate with the mobile station, in which a handover algorithm resides, through reliable messages delivered in an IP multicast group (the benefit of this is that it will avoid the user configuration of cache server IP address in mobile station). In order to receive the data sent to other mobile stations, the network card of this computer should work in promiscuous mode.

Once the mobile station start up a channel scanning or handover process, it first sends a "Data cache start request" control message to the cache server in multicast group, after receiving the acknowledgement from the cache server, the handover algorithm can start the real channel scanning or handover operation.

At the same time, the cache server starts to receive and cache data for this mobile station.

If the content to cache is multicast data (i.e. the mobile station receives a multicast stream), then the cache server joins this multicast group to get the data.

If the content to cache is an unicast data, the cache server has to assemble an fake Ethernet frame with the mobile station's MAC address, and sends it to Ethernet switch once or several times, which deceives the switch, and makes it change the MAC-port map entry of this handover mobile station, and then all the later packets, which are failed to be sent to the mobile station, will be directed to the cache server.

After the scan or handover process is over, the mobile station sends a "Data cache stop request" control message to the same multicast group. When the cache server receives this message, it stops data caching for this mobile station, and replays the cached data to the mobile station through network, and these replayed packets can then be received by the mobile station.

The objective of cache server is to cache the data to be sent to mobile station during scan or handover interval, and the operation of caching starts up and stops on demand. The cache server can be a dedicated device connected into LAN, or can even be program module in other mobile stations (in this way, the mobile stations can help each other in a peer-to-peer mode). The cache server listens to an IP multicast group to receive the control messages from the mobile stations.

Because the cache server can prevent the data packet from losing during scan and handover, the simple algorithm (like just do scan and then handover) can achieve seamless handover result when combined with this on-demand caching mechanism.

In order to co-work with cache server, the following operations should be added into the handover algorithm:
1. The handover algorithm should join the control message multicast group to send and receive caching control messages;
2. "Data cache start request" control message is sent to control message multicast group before handover; and
3. "Data cache stop request" control message is sent to control message multicast group after handover.

In order to assure the reliable delivery of the control message, these messages have acknowledgements.

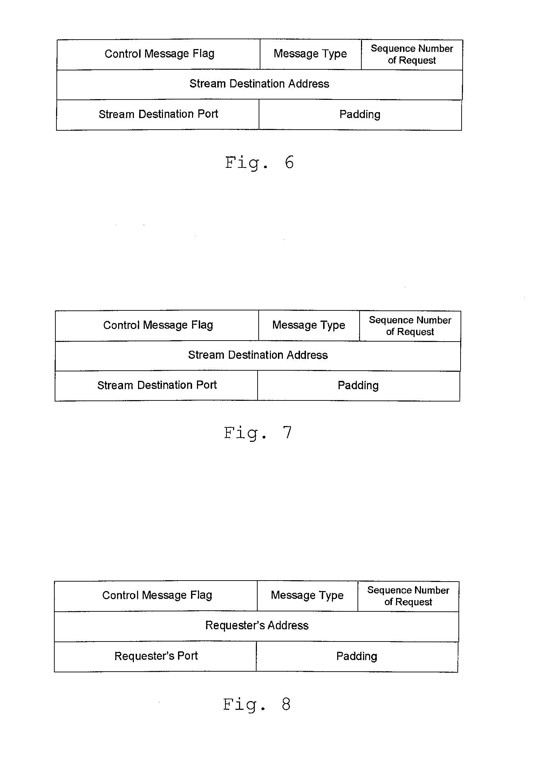

Referring to Figs. 6, 7, and 8, the message formats of the "data cache start request" message, the "data cache stop request" message, and the acknowledgement message will be described in detail. It could be understood by the skilled in the art that the "data cache start request" message, the "data cache stop request" message, and the acknowledgement message are just specific examples without any limitations to the present invention.

### 1. Data cache start request message

Fig. 6 shows message format of the data cache start request message that comprises:
a. Control Message Flag: this is a two-byte flag with "CM" as its content, indicating to the caching server and mobile station whether the received UDP packet is a caching control message;
b. Message Type: a one-byte field with value of 0, indicating this is a data cache start request;
c. Sequence Number of Request: a one-byte field, which is a unique sequence number in local mobile station for the caching message;
d. Stream Destination Address: 4-byte IP address of the stream, which is requested to be cached;
e. Stream destination Port: 2-byte UDP port of the stream to be cached; and
f. Padding: 2-byte padding field, to make the message word-aligned.

### 2. Data cache stop request message

Fig. 7 shows message format of the data cache stop request message. As shown in Fig. 7, the format of this message is almost the same as data cache start request, except that the value of message type field is 1.

### 3. Acknowledgement message

Fig. 8 shows message format of the acknowledge message, which comprises:
a. Control Message Flag: it is the same as data cache start request;
b. Message Type: a one-byte field with value of 2, indicating this is a data cache start request;
c. Sequence Number of Request: it is the same as data cache start request;
d. Requester's Address: 4-byte IP address of the mobile station which starts up caching request;
e. Requester's Port: 2-byte UDP port of the mobile station which starts up caching request; and
f. Padding: it is the same as data cache start request.

Whilst there has been described in the forgoing description preferred embodiments and aspects of the present invention, it will be understood by those skilled in the art that many variations in details of design or construction may be made without departing from the present invention, for example, the technical solution according to the invention can also be applied to other non-delay-sensitive applications. The present invention extends to all features disclosed both individually, and in all possible permutations and combinations.

## Claims

1. A communication system (**200**) for performing the seamless handover of a mobile station (**210**) between at least a first wireless access point (**206**) and a second wireless access point (**208**) within wireless LAN, wherein, the mobile station (**210**) is coupled with at least the first wireless access point (**206**) for receiving and/or sending the data from and/or to the first wireless access point (**206**), the communication system (**200**) comprises:
a first server (**202**) for storing data;
a switch (**204**), coupled with the first and second wireless access points (**206, 208**), for exchanging the data with the first server (**202**) and the first and second wireless access points (**206, 208**); and
a second server (**212**), coupled with the switch (**204**), for storing the data from the first server (**202**) when the mobile station (**210**) roams from the first access point (**206**) to the second access point (**208**), and transferring the stored data to the mobile station (**210**) through the switch (**204**), so as to avoid the packet loss of the mobile station (**210**) during the handover.

2. The communication system (**200**) according to claim 1, wherein the first server (**202**) is a streaming server for storing streaming media data for the mobile station (**210**).

3. The communication system (**200**) according to any one of claims 1 and 2, wherein the second server (**212)** is a cache server for caching the data from the first server (**202**) when the mobile station (**210**) roams from the first access point (**206**) to the second access point (**208**), and transferring the cached data to the mobile station (**210**) through the switch (**204**).

4. The communication system (**200**) according to any one of claims 1 to 3, wherein the communication system (**200**) is a WLAN video stream broadcasting system, and the switch (**204**) is an Ethernet switch.

5. The communication system (**200**) according to any one of claims 1 to 4, wherein during roaming from the first access point (**206**) to the second access point (**208**) and performing channel scanning to find available wireless access points,
the mobile station (**210**) sends a data caching start request to the second server (**212**);
the second server (**212**) sends an acknowledgement message back to the mobile station (**210**) in response to the data cache start request, and starts to receive and cache the data for the mobile station (**210**) from the first server (**202**);
after the handover or scan process is over, the mobile station (**210**) sends data cache stop request to the second server (**212**); and
the second server (**212**) stops caching the data for the mobile station (**210**) in response to the data cache stop request, and transfers the data to the mobile station (**210**).

6. The communication system (**200**) according to claim 5, wherein upon receipt of a multicast data, the second server (**212**) joins this multicast group to get the multicast data from the first server (**202**).

7. The communication system (**200**) according to claim 5, wherein upon receipt of an unicast data, the second server (**212**) produces a fake Ethernet frame and assembles the fake Ethernet frame with the MAC address of the mobile station (**210**) to send the assembled frame to the switch once or several times, so as to deceive the switch (**204**), make the switch (**204**) change the MAC-port map entry of the mobile station (**210**), and then receive the data that otherwise be directed to the mobile station (**210**) from the first server (**202**).

8. The communication system (**200**) according to anyone of Claims 1 to 7, further comprising a live video source (**214**) coupled to the first server to send stream video data to the first server.

9. The communication system (**200**) according to anyone of Claims 1 to 8, wherein the second server (**212**) can work in peer-to-peer mode, and the second sever (**212**) can be integrated with the mobile station (**210**).

10. A communication method for performing the seamless handover of a mobile station between at least a first wireless access point and a second wireless access point within wireless LAN, which comprises following steps:
S302, providing a first server to store data;
S304, providing a switch to exchange the data with the first server and the first and second wireless access points;
S306, coupling the first and second wireless access points with the switch to receive and/or send the data from and/or to the switch;
S308, coupling the mobile station with at least the first wireless access point to receive and/or send the data from and/or to the first wireless access point; and
S310, providing a second server coupled to the switch to store the data from the first server when the mobile station roams from the first access point to the second access point, and to transfer the stored data to the mobile station through the switch, so as to avoid the packet loss of the mobile station during the handover.

11. The communication method according to claim 10, wherein the first server is a streaming server for storing streaming media data for the mobile station.

12. The communication method according to any one of claims 10 and 11, wherein the second server is a cache server for caching the data from the first server when the mobile station roams from the first access point to the second access point, and transferring the cached data to the mobile station through the switch.

13. The communication method according to any one of claims 10 to 12, wherein the communication system is a WLAN video streaming communication system, and the switch is an Ethernet switch.

14. The communication method according to any one of claims 10 to 13, wherein during roaming from the first access point to the second access point and performing channel scanning to find available wireless access points:
the mobile station sends a data caching start request to the second server;
the second server sends an acknowledgement message to the mobile station in response to the data cache start request, and starts to receive and cache the data for the mobile station from the first server;
after the handover or scan process is over, the mobile station sends data cache stop request to the second server; and
the second server stops caching the data for the mobile station in response to the data cache stop request, and transfers the data to the mobile station.

15. The communication method according to claim 16, wherein upon receipt of a multicast data, the second server joins this multicast group to get the multicast data from the first server.

16. The communication method according to claim 15, wherein upon receipt of an unicast data, the second server produces a fake Ethernet frame and assembles the fake Ethernet frame with the MAC address of the mobile station to send the assembled frame to the switch once or several times, so as to deceive the switch, make the switch change the MAC-port map entry of the mobile station, and then receive the data that otherwise be directed to the mobile station from the first server.

17. The communication method according to anyone of claims 10 to 16, further providing a live video source coupled to the first server to send stream video data to the first server.

18. The communication method according to anyone of claims 10 to 17, wherein the second server can work in peer-to-peer mode, the second sever can be integrated with the mobile station.

19. A seamless handover method for a mobile station between at least a first wireless access point and a second access point within a wireless LAN, comprising following steps:
S402, sending a data caching start request to a second server by a mobile station;
S404, sending an acknowledgement message to the mobile station in response to the data cache start request and starting to receive and cache the data for the mobile station from the first server by a second server;
S406, sending a data cache stop request to the second server by the mobile station after the handover or scan process is over,; and
S408, stopping caching the data for the mobile station in response to the data cache stop request and transferring the data to the mobile station by the second server.

20. The seamless handover method according to claim 19, wherein the data cache start request message comprises:
a control message flag field indicating to the second server and the mobile station whether the received UDP packet is a caching control message;
a message type field having a first value, indicating the message is a data cache start request;
a sequence number of request, which is a unique sequence number which in the mobile station for the message;
a stream destination address, which is the IP address of the stream to be cached;
a stream destination port, which is the UDP port of the stream to be cached; and
a padding field, which is used to make the message word-aligned.

21. The seamless handover method according to anyone of claims 19 and 20, wherein the data cache stop request message comprises:
a control message flag field indicating to the second server and the mobile station whether the received UDP packet is a caching control message;
a message type filed having a second value other than the first value, indicating the message is a data cache stop request;
a sequence number of request, which is a unique sequence number in the mobile station for the message;
a stream destination address, which is the IP address of the stream to be cached;
a stream destination port, which is the UDP port of the stream to be cached; and
a padding field, which is used to make the message word-aligned.

22. The seamless handover method according to anyone of claims 19 to 21, wherein the acknowledgement message comprises:
a control message flag field indicating to the second server and the mobile station whether the received UDP packet is a caching control message;
a message type field having a third value other than the first value and the second value, indicating the message is a data cache start request;
a sequence number of request, which is a unique sequence number in the mobile station for the message;
a requester's address, which is the IP address of the mobile station which startups caching request;
a requester's port, which is the UDP port of the mobile station which startups caching request; and
a padding field, which is used to make the message word-aligned.
